# EUROPEAN PATENT SPECIFICATION

(11) **EP 1 015 980 B1**
(45) Date of publication and mention of the grant of the patent: **24.04.2002**
(21) Application number: 96943477.8
(22) Date of filing: 04.11.1996
(51) Int. Cl.: G06F 12/08

(54) **A DATA CACHE CAPABLE OF PERFORMING STORE ACCESSES IN A SINGLE CLOCK CYCLE**
EIN DATEN-CACHE IN DER LAGE SPEICHERZUGRIFF IN EINEM EINFACHEN UHRZYLKUS AUSZUFÜHREN
ANTEMEMOIRE DE DONNEES CAPABLE D'EFFECTUER DES ACCES MEMOIRE DANS UN SEUL CYCLE D'HORLOGE

(43) Date of publication of application: 05.07.2000
(73) Proprietor: ADVANCED MICRO DEVICES INC., Sunnyvale, California 94088-3453 (US)
(72) Inventor: WITT, David, B., Austin, TX 78759 (US); HATTANGADI, Rajiv, M., Austin, TX 78739 (US)
(74) Representative: Brookes Batchellor
(86) International application number: US9617517
(87) International publication number: WO9820420

(56) References cited:
- US-A- 5 235 697
- US-A- 5 564 034
- IBM TECHNICAL DISCLOSURE BULLETIN, vol. 30, no. 10, March 1988, NEW YORK US, pages 1-4, XP002029778 "Fast cache access based on most recently used hits"

## Description

### BACKGROUND OF THE INVENTION

### 1. Field of the Invention

This invention is related to the field of superscalar microprocessors and, more particularly, to data caches capable of performing store accesses in a single clock cycle within high frequency superscalar microprocessors.

### 2. Description of the Relevant Art

Superscalar microprocessors achieve high performance by simultaneously executing multiple instructions in a clock cycle and by specifying the shortest possible clock cycle consistent with the design. As used herein, the term "clock cycle" refers to an interval of time during which the pipeline stages of a microprocessor perform their intended functions. At the end of a clock cycle, the resulting values are moved to the next pipeline stage.

Since superscalar microprocessors execute multiple instructions per clock cycle and the clock cycle is short, a high bandwidth memory system is required to provide instructions and data to the superscalar microprocessor (i.e. a memory system that can provide a large number of bytes in a short period of time). Without a high bandwidth memory system, the microprocessor would spend a large number of clock cycles waiting for instructions or data to be provided, then would execute the received instructions and/or the instructions dependent upon the received data in a relatively small number of clock cycles. Overall performance would be degraded by the large number of idle clock cycles. However, superscalar microprocessors are ordinarily configured into computer systems with a large main memory composed of dynamic random access memory (DRAM) cells. DRAM cells are characterized by access times which are significantly longer than the clock cycle of modern superscalar microprocessors. Also, DRAM cells typically provide a relatively narrow output bus to convey the stored bytes to the superscalar microprocessor. Therefore, DRAM cells provide a memory system that provides a relatively small number of bytes in a relatively long period of time, and do not form a high bandwidth memory system.

Because superscalar microprocessors are typically not configured into a computer system with a memory system having sufficient bandwidth to continuously provide instructions and data, superscalar microprocessors are often configured with caches. Caches are storage devices containing multiple blocks of storage locations, configured on the same silicon substrate as the microprocessor or coupled nearby. The blocks of storage locations are used to hold previously fetched instruction or data bytes. The bytes can be transferred from the cache to the destination (a register or an instruction processing pipeline) quickly; commonly one or two clock cycles are required as opposed to a large number of clock cycles to transfer bytes from a DRAM main memory.

Caches may be organized into an "associative" structure (also referred to as "set associative"). In an associative structure, the blocks of storage locations are accessed as a two-dimensional array having rows and columns. When a cache is searched for bytes residing at an address, a number of bits from the address are used as an "index" into the cache. The index selects a particular row within the two-dimensional array, and therefore the number of address bits required for the index is determined by the number of rows configured into the cache. The act of selecting a row via an index is referred to as "indexing". The addresses associated with bytes stored in the multiple blocks of a row are examined to determine if any of the addresses stored in the row match the requested address. If a match is found, the access is said to be a "hit", and the cache provides the associated bytes. If a match is not found, the access is said to be a "miss". When a miss is detected, the bytes are transferred from the memory system into the cache. The addresses associated with bytes stored in the cache are also stored. These stored addresses are referred to as "tags" or "tag addresses".

The blocks of memory configured into a row form the columns of the row. Each block of memory is referred to as a "way"; multiple ways comprise a row. The way is selected by providing a way value to the cache. The way value is determined by examining the tags for a row and finding a match between one of the tags and the requested address. A cache designed with one way per row is referred to as a "direct-mapped" cache. In a direct-mapped cache, the tag must be examined to determine if an access is a hit, but the tag examination is not required to select which bytes are transferred to the outputs of the cache. Since only an index is required to select bytes from a direct-mapped cache, the direct-mapped cache is a "linear array" requiring only a single value to select a storage location within it.

Both direct-mapped and associative caches are employed in high frequency (i.e. short clock cycle) superscalar microprocessors. In high frequency applications, set associative caches either become a clock cycle limiter or require multiple clock cycles to complete a cache access because the comparison of tags to the request address and the subsequent selection of data bytes to convey to the output requires more time than the desired clock cycle time allows. The term cache bandwidth is used to describe the number of cache requests which may be made per clock cycle. Cache bandwidth decrease due to multiple clock cycle accesses is particularly detrimental to superscalar microprocessors attempting to execute multiple instructions (which may require cache access) per clock cycle. Longer clock cycles are also detrimental to the performance of a microprocessor, since fewer instructions may be executed per second.

Direct-mapped caches, which compare the selected tag to the request address in parallel with conveying data bytes to the output, operate in less time than the associative cache. Unfortunately, direct-mapped caches are associated with lower hit rates (i.e. the percentage of accesses that are hits) than associative caches with a similar storage capacity. Furthermore, direct-mapped caches are more susceptible to "thrashing". Thrashing is a phenomenon that occurs when the pattern of address requests presented to the cache contains several dissimilar addresses with the same index. Dissimilar addresses are addresses that are stored in the cache with different tags. As an illustrative example, addresses A and B may access the cache alternately and repeatedly. Address A and address B have the same index, and access a direct-mapped cache. First, address A accesses the cache and misses. The indexed cache storage location is filled with bytes associated with address A. Next, address B accesses the cache and misses. The indexed cache storage location discards the bytes associated with address A and is filled with bytes associated with address B. Address A accesses the cache again, and misses. The cache storage location discards the bytes associated with address B and is filled with bytes associated with address A. An associative cache would be able to store bytes associated with both address A and address B simultaneously.

An additional problem associated with both direct-mapped and associative data caches in high frequency applications is the execution of store instructions. A store instruction causes bytes to be stored at a memory location. Unlike load instructions, in which data might be speculatively forwarded to the target (a register, for example) and validated as the correct data in a later clock cycle, store instructions typically cannot speculatively store their operand data into the cache and validate that the access was a cache hit in a later clock cycle. If the speculation is incorrect, data within the cache will have been destroyed. Instead, when a store access to a cache is made, the cache is searched to determine if data associated with the store address is contained within the cache. If the store address is a hit, then the data bytes may be stored into the cache in the storage location currently associated with the store address. If the store address is a miss, data bytes associated with the store address must first be transferred into the cache from main memory. Unfortunately, searching for a hit first and then storing the data bytes has often required two clock cycles of cache access for each store instruction executed in high frequency microprocessors. During the first clock cycle of a store access, the address of the store instruction is determined to hit or miss in the cache. During the second clock cycle, the data associated with the store instruction is stored into the cache. It would be advantageous to perform store accesses to the cache in one clock cycle. Additionally, such a storage device having the access time of a direct-mapped cache with the hit rate and insensitivity to thrashing of an associative cache is desired.

IBM Technical Disclosure Bulletin Vol.30. No.10, 10 March 1988, pages 1-4 discloses one technique for performing a store access in a n-way set-associative cache in which the old data is backed-up before a store to achieve a one-cycle store, and the back-up copy is recovered in the next cycle upon a cache hit misprediction.

US-A-5,235,697 discloses a set-prediction cache memory that comprises an extension of a set-associative cache memory which operates in parallel to the set-associative structure to increase the overall speed of the cache memory while maintaining its performance.

Our related EP-A-0,651,321 discloses a superscaler processor wherein an integer functional unit and a floating point functional unit share a main data processing bus. The integer unit and the floating point unit also share a common reorder buffer, register file, branch prediction unit and load/store unit which all reside on the same main data processing bus. Instruction and data caches are coupled to a main memory via an internal address data bus which handles communications therebetween. An instruction decoder is coupled to the instruction cache and is capable of decoding multiple instructions per microprocessor cycle. Instructions are dispatched from the decoder in speculative order, issued out-of-order and completed out-of-order. Instructions are retired from the reorder buffer to the register file in-order.

The problems outlined above are in large part solved by a data cache according to the present invention. The present data cache speculatively stores data within a predicted way of the cache after capturing the data currently being stored in that predicted way. During a subsequent clock cycle, the cache hit information for the store access validates the way prediction. If the way prediction is correct, then the store is complete. If the way prediction is incorrect, then the captured data is restored to the predicted way. If the store access hits in an unpredicted way, the store data is transferred into the correct storage location within the data cache concurrently with the restoration of data in the predicted storage location.

Each store for which the way prediction is correct utilizes a single clock cycle of data cache bandwidth. Therefore, available data cache bandwidth is increased over conventional data caches which typically require two clock cycles to perform stores. A superscalar microprocessor incorporating the present data cache may therefore achieve higher performance due to the increased available data cache bandwidth.

Since way mispredicted stores which hit in the present data cache are completed in two clock cycles, way mispredicted stores utilize the same amount of cache bandwidth as stores in conventional caches. No penalty exists with respect to conventional caches for employing way prediction for stores.

Additionally, the way prediction structure implemented within the data cache advantageously bypasses the tag comparisons of the data cache to select data bytes for the output for embodiments of the present invention which employ an associative data cache. Therefore, the access time of the associative data cache may be substantially similar to a direct-mapped cache access time (i.e. the access time of the way prediction array within the way prediction structure). The present data cache is therefore suitable for high frequency superscalar microprocessors.

According to one aspect of the present invention, there is provided a data cache as set forth in claim 1.

According to a second aspect of the invention there is provided a method for performing a store access to a data cache as set forth in claim 14.

Other objects and advantages of the invention will become apparent upon reading the following detailed description and upon reference to the accompanying drawings in which:
Figure 1 is a block diagram of a superscalar microprocessor including a data cache according to the present invention.
Figure 2 is a block diagram of the data cache shown in Figure 1.
Figure 3 is a block diagram of portions of the data cache shown in Figure 2, illustrating the writing and reading of a storage location.
Figure 4A is a timing diagram showing two consecutive store accesses to said data cache in which a way prediction is correct for both accesses.
Figure 4B is a timing diagram showing two consecutive store accesses to said data cache in which a way prediction is incorrect for the first access.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION OF THE INVENTION

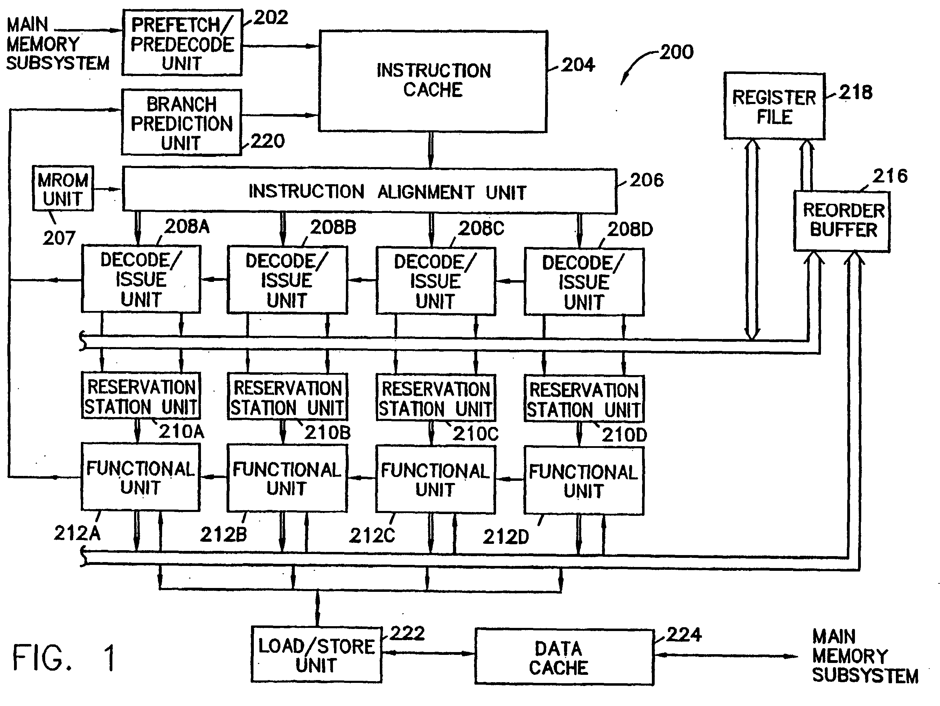

Referring next to Figure I, a block diagram of a superscalar microprocessor 200 including a data cache 224 in accordance with the present invention is shown. As illustrated in the embodiment of Figure 1, superscalar microprocessor 200 includes a prefetch/predecode unit 202 and a branch prediction unit 220 coupled to an instruction cache 204. Instruction alignment unit 206 is coupled between instruction cache 204 and a plurality of decode units 208A-208D (referred to collectively as decode units 208). Each decode unit 208A-208D is coupled to respective reservation station units 210A-210D (referred to collectively as reservation stations 210), and each reservation station 210A-210D is coupled to a respective functional unit 212A-212D (referred to collectively as functional units 212). Decode units 208, reservation stations 210, and functional units 212 are further coupled to a reorder buffer 216, a register file 218 and a load/store unit 222. A data cache 224 is finally shown coupled to load/store unit 222, and an MROM unit 209 is shown coupled to instruction alignment unit 206.

Generally speaking, instruction cache 204 is a high speed cache memory provided to temporarily store instructions prior to their dispatch to decode units 208. In one embodiment, instruction cache 204 is configured to cache up to 32 kilobytes of instruction code organized in lines of 16 bytes each (where each byte consists of 8 bits). During operation, instruction code is provided to instruction cache 204 by prefetching code from a main memory (not shown) through prefetch/predecode unit 202. It is noted that instruction cache 204 could be implemented in a set-associative, a fully-associative, or a direct-mapped configuration.

Prefetch/predecode unit 202 is provided to prefetch instruction code from the main memory for storage within instruction cache 204. In one embodiment, prefetch/predecode unit 202 is configured to burst 64-bit wide code from the main memory into instruction cache 204. It is understood that a variety of specific code prefetching techniques and algorithms may be employed by prefetch/predecode unit 202.

As prefetch/predecode unit 202 fetches instructions from the main memory, it generates three predecode bits associated with each byte of instruction code: a start bit, an end bit, and a "functional" bit. The predecode bits form tags indicative of the boundaries of each instruction. The predecode tags may also convey additional information such as whether a given instruction can be decoded directly by decode units 208 or whether the instruction must be executed by invoking a microcode procedure controlled by MROM unit 209, as will be described in greater detail below.

Table 1 indicates one encoding of the predecode tags. As indicated within the table, if a given byte is the first byte of an instruction, the start bit for that byte is set. If the byte is the last byte of an instruction, the end bit for that byte is set. If a particular instruction cannot be directly decoded by the decode units 208, the functional bit associated with the first byte of the instruction is set. On the other hand, if the instruction can be directly decoded by the decode units 208, the functional bit associated with the first byte of the instruction is cleared. The functional bit for the second byte of a particular instruction is cleared if the opcode is the first byte, and is set if the opcode is the second byte. It is noted that in situations where the opcode is the second byte, the first byte is a prefix byte. The functional bit values for instruction byte numbers 3-8 indicate whether the byte is a MODRM or an SIB byte, or whether the byte contains displacement or immediate data.

**Table 1.**

| Encoding of Start, End and Functional Bits | | | | |
|---|---|---|---|---|
| Instr. Byte Number | Start Bit Value | End Bit Value | Functional Bit Value | Meaning |
| 1 | 1 | X | 0 | Fast decode |
| 1 | 1 | X | 1 | MROM instr. |
| 2 | 0 | X | 0 | Opcode is first byte |
| 2 | 0 | X | 1 | Opcode is this byte, first byte is prefix |
| 3-8 | 0 | X | 0 | Mod R/M or SIB byte |
| 3-8 | 0 | X | 1 | Displacement or immediate data; the second functional |
| | | | | bit set in bytes 3-8 indicates immediate data |
| 1-8 | X | 0 | X | Not last byte of instruction |
| 1-8 | X | 1 | X | Last byte of instruction |

As stated previously, in one embodiment certain instructions within the x86 instruction set may be directly decoded by decode unit 208. These instructions are referred to as "fast path" instructions. The remaining instructions of the x86 instruction set are referred to as "MROM instructions". MROM instructions are executed by invoking MROM unit 209. More specifically, when an MROM instruction is encountered, MROM unit 209 parses and serializes the instruction into a subset of defined fast path instructions to effectuate a desired operation. A listing of exemplary x86 instructions categorized as fast path instructions as well as a description of the manner of handling both fast path and MROM instructions will be provided further below.

Instruction alignment unit 206 is provided to channel variable byte length instructions from instruction cache 204 to fixed issue positions formed by decode units 208A-208D. Instruction alignment unit 206 independently and in parallel selects instructions from three groups of instruction bytes provided by instruction cache 204 and arranges these bytes into three groups of preliminary issue positions. Each group of issue positions is associated with one of the three groups of instruction bytes. The preliminary issue positions are then merged together to form the final issue positions, each of which is coupled to one of decode units 208.

Before proceeding with a detailed description of the data cache 224, general aspects regarding other subsystems employed within the exemplary superscalar microprocessor 200 of Figure 1 will be described. For the embodiment of Figure 1, each of the decode units 208 includes decoding circuitry for decoding the predetermined fast path instructions referred to above. In addition, each decode unit 208A-208D routes displacement and immediate data to a corresponding reservation station unit 210A-210D. Output signals from the decode units 208 include bit-encoded execution instructions for the functional units 212 as well as operand address information, immediate data and/or displacement data.

The superscalar microprocessor of Figure 1 supports out of order execution, and thus employs reorder buffer 216 to keep track of the original program sequence for register read and write operations, to implement register renaming, to allow for speculative instruction execution and branch misprediction recovery, and to facilitate precise exceptions. As will be appreciated by those of skill in the art, a temporary storage location within reorder buffer 216 is reserved upon decode of an instruction that involves the update of a register to thereby store speculative register states. Reorder buffer 216 may be implemented in a first-in-first-out configuration wherein speculative results move to the "bottom" of the buffer as they are validated and written to the register file, thus making room for new entries at the "top" of the buffer. Other specific configurations of reorder buffer 216 are also possible, as will be described further below. If a branch prediction is incorrect, the results of speculatively-executed instructions along the mispredicted path can be invalidated in the buffer before they are written to register file 218.

The bit-encoded execution instructions and immediate data provided at the outputs of decode units 208A-208D are routed directly to respective reservation station units 210A-210D. In one embodiment, each reservation station unit 210A-210D is capable of holding instruction information (i.e., bit encoded execution bits as well as operand values, operand tags and/or immediate data) for up to three pending instructions awaiting issue to the corresponding functional unit. It is noted that for the embodiment of Figure 1, each decode unit 208A-208D is associated with a dedicated reservation station unit 210A-210D, and that each reservation station unit 210A-210D is similarly associated with a dedicated functional unit 212A-212D. Accordingly, four dedicated "issue positions" are formed by decode units 208, reservation station units 210 and functional units 212. Instructions aligned and dispatched to issue position 0 through decode unit 208A are passed to reservation station unit 210A and subsequently to functional unit 212A for execution. Similarly, instructions aligned and dispatched to decode unit 208B are passed to reservation station unit 210B and into functional unit 212B, and so on.

Upon decode of a particular instruction, if a required operand is a register location, register address information is routed to reorder buffer 216 and register file 218 simultaneously. Those of skill in the art will appreciate that the x86 register file includes eight 32 bit real registers (i.e., typically referred to as EAX, EBX, ECX, EDX, EBP, ESI, EDI and ESP). Reorder buffer 216 contains temporary storage locations for results which change the contents of these registers to thereby allow out of order execution. A temporary storage location of reorder buffer 216 is reserved for each instruction which, upon decode, is determined to modify the contents of one of the real registers. Therefore, at various points during execution of a particular program, reorder buffer 216 may have one or more locations which contain the speculatively executed contents of a given register. If following decode of a given instruction it is determined that reorder buffer 216 has a previous location or locations assigned to a register used as an operand in the given instruction, the reorder buffer 216 forwards to the corresponding reservation station either: 1) the value in the most recently assigned location, or 2) a tag for the most recently assigned location if the value has not yet been produced by the functional unit that will eventually execute the previous instruction. If the reorder buffer has a location reserved for a given register, the operand value (or tag) is provided from reorder buffer 216 rather than from register file 218. If there is no location reserved for a required register in reorder buffer 216, the value is taken directly from register file 218. If the operand corresponds to a memory location, the operand value is provided to the reservation station unit through load/store unit 222.

Details regarding suitable reorder buffer implementations may be found within the publication "Superscalar Microprocessor Design" by Mike Johnson, Prentice-Hall, Englewood Cliffs, New Jersey, 1991, and within the co-pending, commonly assigned patent application entitled "Superscalar Microprocessor", EPO651321.

Reservation station units 210A-210D are provided to temporarily store instruction information to be speculatively executed by the corresponding functional units 212A-212D. As stated previously, each reservation station unit 210A-210D may store instruction information for up to three pending instructions. Each of the four reservation stations 210A-210D contain locations to store bit-encoded execution instructions to be speculatively executed by the corresponding functional unit and the values of operands. If a particular operand is not available, a tag for that operand is provided from reorder buffer 216 and is stored within the corresponding reservation station until the result has been generated (i.e., by completion of the execution of a previous instruction). It is noted that when an instruction is executed by one of the functional units 212A-212D, the result of that instruction is passed directly to any reservation station units 210A-210D that are waiting for that result at the same time the result is passed to update reorder buffer 216 (this technique is commonly referred to as "result forwarding"). Instructions are issued to functional units for execution after the values of any required operand(s) are made available. That is, if an operand associated with a pending instruction within one of the reservation station units 210A-210D has been tagged with a location of a previous result value within reorder buffer 216 which corresponds to an instruction which modifies the required operand, the instruction is not issued to the corresponding functional unit 212 until the operand result for the previous instruction has been obtained. Accordingly, the order in which instructions are executed may not be the same as the order of the original program instruction sequence. Reorder buffer 216 ensures that data coherency is maintained in situations where read-after-write dependencies occur.

In one embodiment, each of the functional units 212 is configured to perform integer arithmetic operations of addition and subtraction, as well as shifts, rotates, logical operations, and branch operations. It is noted that a floating point unit (not shown) may also be employed to accommodate floating point operations.

Each of the functional units 212 also provides information regarding the execution of conditional branch instructions to the branch prediction unit 220. If a branch prediction was incorrect, branch prediction unit 220 flushes instructions subsequent to the mispredicted branch that have entered the instruction processing pipeline, and causes prefetch/predecode unit 202 to fetch the required instructions from instruction cache 204 or main memory. It is noted that in such situations, results of instructions in the original program sequence which occur after the mispredicted branch instruction are discarded, including those which were speculatively executed and temporarily stored in load/store unit 222 and reorder buffer 216. Exemplary configurations of suitable branch prediction mechanisms are well known.

Results produced by functional units 212 are sent to the reorder buffer 216 if a register value is being updated, and to the load/store unit 222 if the contents of a memory location is changed. If the result is to be stored in a register, the reorder buffer 216 stores the result in the location reserved for the value of the register when the instruction was decoded. As stated previously, results are also broadcast to reservation station units 210A-210D where pending instructions may be waiting for the results of previous instruction executions to obtain the required operand values.

Generally speaking, load/store unit 222 provides an interface between functional units 212A-212D and data cache 224. In one embodiment, load/store unit 222 is configured with a load/store buffer with eight storage locations for data and address information for pending loads or stores. Decode units 208 arbitrate for access to the load/store unit 222. When the buffer is full, a decode unit must wait until the load/store unit 222 has room for the pending load or store request information. The load/store unit 222 also performs dependency checking for load instructions against pending store instructions to ensure that data coherency is maintained.

Data cache 224 is a high speed cache memory provided to temporarily store data being transferred between load/store unit 222 and the main memory subsystem. In one embodiment, data cache 224 has a capacity of storing up to sixteen kilobytes of data. It is understood that data cache 224 may be implemented in a variety of specific memory configurations, including a set associative configuration and a direct-mapped configuration.

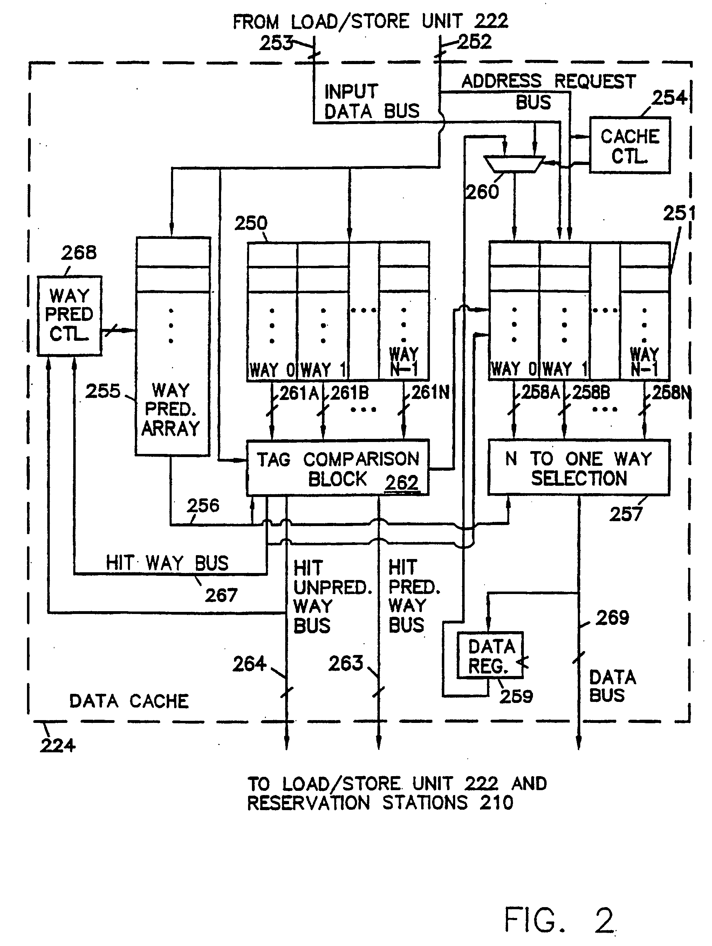

Turning now to Figure 2, a block diagram of an embodiment of data cache 224 according to the present invention is shown. Generally speaking, data cache 224 is configured to perform store accesses in one clock cycle in a high frequency superscalar microprocessor such as microprocessor 200. In this embodiment, a way prediction structure is accessed in parallel with the cache arrays. The way prediction structure predicts which way within the indexed row of data cache 224 is storing data bytes associated with the store address. Data cache 224 transfers the data stored in the predicted way to an output port and then speculatively stores the data associated with the store instruction into the predicted way. The data transferred from the predicted way is stored in a data register. During a subsequent clock cycle, cache hit information regarding the store access is determined. If the way prediction is correct and the store access is a cache hit, then the store access is successfully performed in a single clock cycle. If the way prediction is incorrect but the store address hits in another way, a second clock cycle is used to restore the previous data to the speculatively stored way and to store the data into the correct way. If the store address misses data cache 224, then the previous data is restored to the predicted way and the store address is serviced as a cache miss. As used herein with respect to data cache store accesses, the term "speculative" refers to storing data associated with the store access into a storage location within data cache 224 without first ensuring that the storage location is storing data associated with the store address.

For simplicity, Figure 2 shows only those elements of data cache 224 which are used in conjunction with performing store accesses in one clock cycle. Other portions of data cache 224 (not shown) are used to perform other functions, such as cache refills in response to cache misses. In this embodiment, data cache 224 is an N-way associative cache, and so is configured with an N-way associative tag array 250 and an N-way associative data array 251. Coupled to input ports of tag array 250 and data array 251 is an address request bus 252 and an input data bus 253 from load/store unit 222. Address request bus 252 is configured to convey the addresses of requests along with request identification information from load/store unit 222. A request may be a load access or a store access. Request identification information includes an indication as to the load or store nature of the request. Input data bus 253 is configured to convey data associated with each store access request conveyed on address request bus 252. In one embodiment, load/store unit 222 may convey up to two requests per clock cycle on address request bus 252 and input data bus 253. Both data array 251 and tag array 250 are configured with output ports associated with each request and each way of data cache 224. In one embodiment, data cache 224 is eight way associative (i.e. N is eight).

Address request bus 252 is additionally coupled to way prediction array 255, which is configured with an input port and an output port for each request which may be conveyed on address request bus 252. In one embodiment, way prediction array 255 is a linear array of 512 way predictions. Way predictions may be a decoded value in which a particular bit within the value being set is indicative of a particular way of data cache 224. In another embodiment, way predictions are an encoded value between 0 and N-1 wherein each value is indicative of a particular way of data cache 224. Way prediction array 255 conveys a way prediction for each request on a way prediction bus 256, which is coupled to an N to one way selection device 257 and to data array 251. The way prediction for each request is used by N to one way selection device 257 to select one of the associated N-ways conveyed on a set of way data buses 258A-258N. Each way data bus 258 transfers data bytes from an indexed way of data cache 224 for each request on address request bus 252. The selected data bytes are conveyed on a data bus 269 to load/store unit 222 and reservation stations 210. Additionally, the selected data bytes are stored in a data register 259. Data register 259 stores the data bytes until the following clock cycle, during which the data bytes are conveyed to a multiplexor 260. Data register 259 and multiplexor 260 are used for the restoration of data to a storage location within data cache 224 when data is speculatively stored incorrectly to the storage location (as will be described below). The output of multiplexor 260 is coupled to the data input ports of data array 251.

A set of way tag buses 261A-261N deliver the tags produced on the output ports of tag array 250 to a tag comparison block 262. Tag comparison block 262 is additionally coupled to address request bus 252 and way prediction bus 256. Tag comparison block 262 is configured to determine if a request address hits in data cache 224, as well as whether or not the hit occurs in the predicted way. If a request hits in the predicted way of data cache 224, an associated signal is asserted on hit predicted way bus 263. Hit predicted way bus 263 is coupled to load/store unit 222 and reservation stations 210. If a request hits data cache 224, but in a way other than the predicted way, an associated signal is asserted on a hit unpredicted way bus 264. Hit unpredicted way bus 264 is coupled to load/store unit 222 and reservation stations 210, and is additionally coupled to a way prediction control unit 268. If a request is a miss, then the associated signals on hit predicted way bus 263 and hit unpredicted way bus 264 are not asserted. Tag comparison block 262 additionally provides the way of data cache 224 in which each request hits on a hit way bus 267 coupled to a way prediction control unit 268 and to data array 251.

Way prediction control unit 268 is configured to update way prediction array 255, and is a part of the way prediction structure of data cache 224. When a hit in an unpredicted way is detected by tag comparison block 262, the associated hit way from hit way bus 267 is stored into the storage location within way prediction array 255 which is indexed by the associated request address. Way prediction control unit 268 is coupled to a set of data input ports in order to provide the update way or ways, and controls the writing of update ways into way prediction array 255.

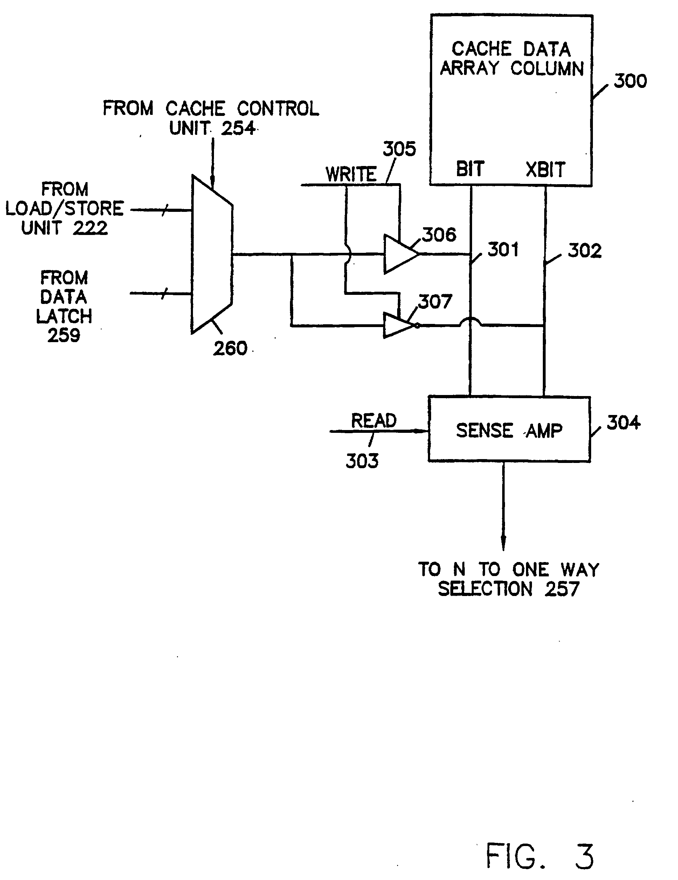

As mentioned above, data cache 224 speculatively stores data associated with a store access into the predicted way. When a store access is conveyed on address request bus 252 (and the associated data on input data bus 253), a cache control unit 254 causes multiplexor 260 to select the data bytes on input data bus 253 to be conveyed on an input port to data array 251. The address of the access is used to index into data array 251 and tag array 250, causing the associated data and tags to be transferred on way data buses 258 and way tag buses 261, respectively. In parallel, the request address indexes into way prediction array 255 and causes the way prediction stored in the indexed storage location to be conveyed on way prediction bus 256. The way prediction is received by data array 251, and the storage location indicated by the way prediction is written with the data bytes associated with the store access. The indicated storage location is written after the previous data is transferred on way data buses 258 (as will be explained in more detail below with respect to Figure 3). In one embodiment, byte enables indicate which bytes of the storage location should be written with the input data bytes. Other bytes within the storage location remain unchanged.

The way prediction is additionally conveyed to way selection device 257, which selects the predicted way to transfer data bytes on data bus 269. These data bytes are stored in data register 259, and therefore the data that is being overwritten within data array 251 is saved. Finally, the way prediction is conveyed to tag comparison block 262. During a subsequent clock cycle, tag comparison block 262 completes its compares of tags to the request addresses. The hit/miss information so generated is combined with the way prediction to produce the signals on hit unpredicted way bus 264, hit predicted way bus 263, and miss bus.

If the store access is a hit in the predicted way, then no action need be taken by data cache 224. The speculative storage of data in the previous clock cycle is correct. Load/store unit 222 may discard the associated store instruction. Therefore, stores which hit in the predicted way are advantageously performed in a single clock cycle. A superscalar microprocessor incorporating a data cache according to the present invention realizes increased cache bandwidth over prior data caches due to the single clock cycle stores. Additionally, since way prediction bypasses the tag comparisons of tag comparison block 262 to provide data, the access time of the associative cache is advantageously shortened. Such a data cache may be suitable for high frequency applications.

However, if a hit in an unpredicted way is detected for a store access, then the store data has been stored into an incorrect storage location in data cache 224. The correct data for that storage location is stored within data register 259, and the clock cycle in which the hit/miss information is generated is used to restore the correct data to the predicted way. Load/store unit 222 is configured to cancel a request in a clock cycle subsequent to the first access of the store request if the first access hits in an unpredicted way. Cache control unit 254 uses the idle port associated with the cancelled access to access the row indexed by the store access in data array 251, tag array 250, and way prediction array 255. The correct way for the store access is conveyed on hit way bus 267, and way prediction control unit 268 stores the correct way in the indexed storage location of way prediction array 255. Additionally, the correct way is conveyed on hit way bus 267 to data array 251. Cache control unit 254 receives the hit predicted way and hit unpredicted way signals, and is configured to cause multiplexor 260 to select the data stored in data register 259 during clock cycles in which a hit in an unpredicted way is detected. Multiplexor 260 transfers the bytes to a data input port of data array 251, and the bytes are written into the originally predicted way. The originally predicted way is conveyed to data array 251 from tag comparison block 262. Additionally, the data associated with the store access is transferred to another data input port of data array 251, and this data is written into the correct way by data array 251 according to the aforementioned byte enables. Therefore, a store access which hits in an unpredicted way is performed in two clock cycles, and the data that was incorrectly overwritten in the predicted way is restored to the value contained prior to the store access.

If a miss is detected for a store access, then the data associated with the store access is not written into data cache 224 until the data associated with the store address is transferred from main memory (if microprocessor 200 is configured to allocate a storage location in data cache 224 for store miss accesses). If microprocessor 200 is configured not to allocate a storage location on a store miss access, the store data is written to memory. In either the allocate or no allocate case, the data in the predicted way is restored as described above for the hit in the unpredicted way case. Way prediction array 255 is not updated for the miss case, since there is not a correct way prediction for a cache miss.

Turning now to Figure 3, portions of data array 251 (shown in Figure 2) are shown to further illustrate elements of the present invention. Figure 3 depicts a column 300 of data array 251 corresponding to a bit of storage in each row of data array 251. When an address is conveyed to data array 251, one of the storage locations in column 300 is indexed, and the value within the location is conveyed on bit conductor 301 and xbit (or bit bar) conductor 302. Bit conductor 301 is configured to convey the value stored in the indexed bit location, and xbit conductor 302 is configured to convey an inversion of the value stored in the indexed bit location.

As will be appreciated by those skilled in the art, bit conductor 301 and xbit conductor 302 are charged to a high voltage prior to the address selecting a bit location for reading. The address is then conveyed to data array 251 and the selected bit location begins to discharge either bit conductor 301 (if the selected location stores a logical zero) or xbit conductor 302 (if the selected location stores a logical one). A read pulse is then transferred on read conductor 303 to a senseamp 304. As will be appreciated by those skilled in the art, a senseamp is a device which senses a voltage difference between the voltage on bit conductor 301 and the voltage on xbit conductor 302 and converts the voltage difference to a logical one or a logical zero. In one embodiment, a logical one is the output of senseamp 304 if bit conductor 301 has a higher voltage than xbit conductor 302 when the read pulse is conveyed on read conductor 303. A logical zero is the output of senseamp 304 if bit conductor 301 has a lower voltage than xbit conductor 302. When the read pulse is conveyed to senseamp 304, senseamp 304 is isolated from bit conductor 301 and bit conductor 302, so that the action of senseamp 304 does not influence the voltages on these conductors. Therefore, senseamp 304 essentially latches the value at the time the read pulse arrives. The value generated by senseamp 304 is conveyed to way selection device 257 as part of way data buses 258.

After the read pulse occurs, a write pulse is conveyed on a write conductor 305 which is coupled to a pair of tristating buffers. Tristating buffer 306 and inverting tristating buffer 307 are used to store a bit of data into the indexed bit location of column 300. The bit of data is provided by multiplexor 260, which also provides other bits of data for other columns within data array 251. Multiplexor 260 is operated as described above. The write pulse is produced during clock cycles when a store access is conveyed by load/store unit 222 to data cache 224 or when a restoration of data from an incorrectly predicted store access is being performed. When the write pulse is activated, buffers 306 and 307 charge bit conductor 301 and xbit conductor 302 to values indicative of the bit from multiplexor 260. A value indicative of the bit from multiplexor 260 is thereby stored into the indexed bit location in column 300. As can be understood from the foregoing description, the original data is read from data array 251 prior to the speculative write of store access data. The restoration of data may be performed for cases where the speculation is found to be incorrect by storing the original data into the storage location in a subsequent clock cycle.

As will be appreciated by those skilled in the art, a read from cache data array column 300 is an inherently slow process. Bit and xbit conductors 301 and 302 typically have a large capacitance. A storage location within cache data array column 300 is configured with transistors capable of a relatively low current which may only slowly discharge the appropriate conductor 301 or 302. The storage locations within cache data array column 300 are numerous, making larger transistors (capable of higher currents) expensive in terms of silicon area. Conversely, tristating buffers 306 and 307 are fewer in number and may therefore by significantly larger and may charge or discharge conductors 301 and 302 quickly. Therefore, writes to storage locations within cache data array 251 may be performed in significantly less time than reads. Performing a write during the same clock cycle as a read has minimal effect on the clock cycle time, especially considering that the row within cache data array column 300 is selected during the read. A relatively small amount of added time for tristating buffers 306 and 307 to charge or discharge conductors 301 and 302 is used. Advantageously, adding the read and write to data array 251 within the same clock cycle enables the present invention with negligible deleterious affect on clock cycle time. In many cases, cycle time may not be affected as the added time to perform the write after the read is less than the desired clock cycle time.

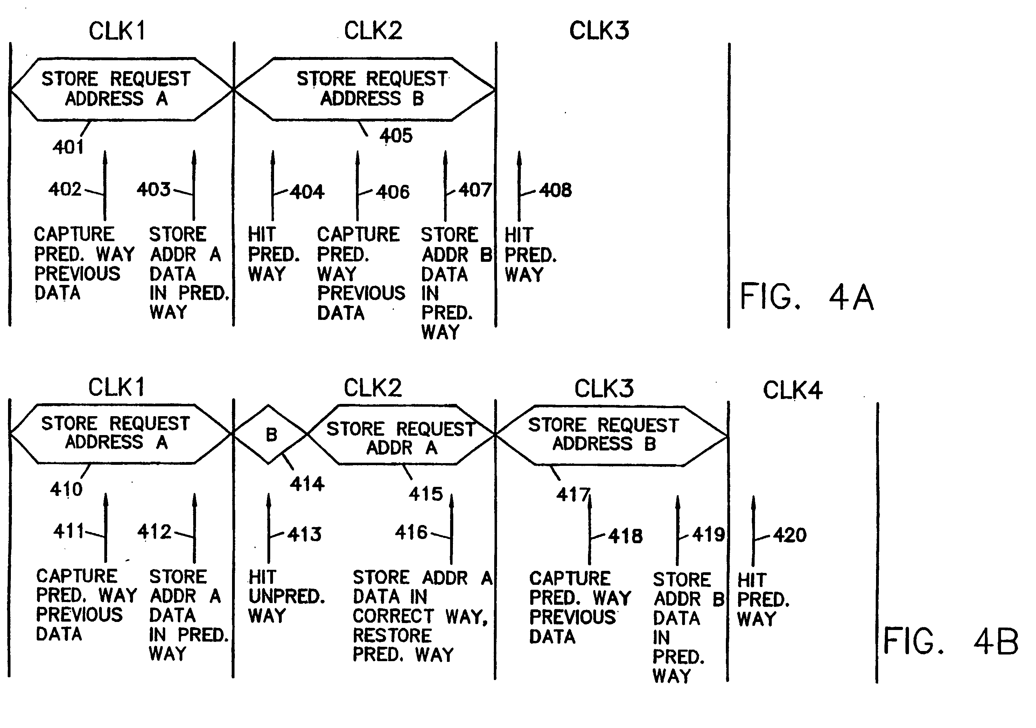

Turning next to Figure 4A, a timing diagram of an exemplary pair of store accesses to data cache 224 is shown. In this example, both store accesses receive correct way predictions. The clock cycles are consecutive, and are labeled CLK1, CLK2 and CLK3. During CLK1, a store request to an address "A" is conveyed to data cache 224 by load/store unit 222, as indicated by block 401. The address is conveyed to way prediction array 255, which selects the indexed way prediction and transfers the prediction on way prediction bus 256. Data array 251 receives the way prediction and address A, and selects the storage location corresponding to the indexed row and the predicted way. The data bytes stored within the selected storage location are transferred to an output port of data array 251 and selected by way selection device 257. The data bytes are thereby stored into data register 259. These actions are represented on Figure 4A as arrow 402, where the data previously stored in the selected storage location is captured. Subsequently during CLK1 (as indicated by arrow 403), the data bytes associated with the store access are stored into the selected storage location.

Early in CLK2 (as indicated by arrow 404), a hit in the predicted way is detected by data cache 224. Therefore, address A was correctly stored within data cache 224 during CLK1. Additionally, load/store unit 222 conveys a store request for an address "B" (as shown in block 405). Similar to CLK1 above, the data bytes in the predicted way are read and stored within data register 259, as indicated by arrow 406. Again similar to CLK1, the data bytes associated with the store access are stored in the selected storage location (shown as arrow 407 in Figure 4A). During CLK3, address B is determined to hit in the predicted way and therefore the store access completed successfully in CLK2 (as indicated by arrow 408). As can be seen from Figure 4A, store accesses are advantageously completed in one clock cycle as long as the way prediction is correct.

Turning now to Figure 4B, a timing diagram of another exemplary pair of store access to data cache 224 are shown. In this example, the first store access will be found to hit in an unpredicted way. During CLK1, load/store unit 222 conveys a store access for an address "A" to data cache 224, as indicated by block 410. As with CLK1 in Figure 4A and as indicated by arrow 411, the data stored in the predicted way and indexed row of data cache 224 is captured in data register 259. The data associated with the store access to address A is stored into data cache 224 in the predicted way of the indexed row, as indicated by arrow 412.

During CLK2, load/store unit 222 begins to transfer a store access to an address "B" (as indicated by block 414). However, a hit in an unpredicted way is detected with respect to address A (shown by arrow 413). Load/store unit 222 cancels its request for address B and data cache 224 indexes the row indicated by address A once again, as indicated by block 415. The data in the predicted way is restored and the correct way is written with data associated with the store access, as indicated by arrow 416.

During CLK3, the request for store access to address B is conveyed by load/store unit 222 (as indicated by block 417). The data from the selected storage location is stored in data register 259 and the data associated with address B is stored into the selected storage location, shown as arrows 418 and 419, respectively. Early in CLK4, address B is determined to hit in the predicted way (arrow 420), and so address B successfully stored into data cache 224 in one clock cycle. Therefore, a hit in an unpredicted way for a store access incurs a one clock cycle penalty.

In accordance with the above disclosure, a data cache capable of performing store accesses in a single cycle has been disclosed. For many store accesses, single cycle cache access is achieved by speculatively storing to the data cache according to a way prediction. In cases where the way prediction is correct, the store access is advantageously completed in one clock cycle. Data cache bandwidth is increased by the removal of extra store access cycles. A superscalar microprocessor employing such a data cache may achieve increased performance due to the increased access to the data cache that is available. Additionally, since the way prediction structure is used, the associative cache may be characterized by an access time consistent with a direct-mapped cache. Therefore, the data cache is suitable for high frequency applications.

## Claims

1. A data cache (224) comprising:
an n-way associative data array (251) where n ≥ 2 including a plurality of storage locations (WAYn) configured to store data bytes wherein said data array has an address input port and, coupled to an input data bus (253), a first data input port, to receive at last one input address and associated input data, wherein said input address selects in indexed storage locations in the data array from each of which array output data is provided;
a n-way cache tag array (250) configured to receive said input address and to store addresses associated with data stored in said data array;
a tag comparison block (262) coupled to said cache tag array, wherein said tag comparison block receives said input address and compares the input address with the addresses stored within said cache tag array to determine which if any of said indexed plurality of storage locations is storing data associated with said input address;
a way prediction structure (255, 268) coupled (256) to said data array and to said tag comparison block, wherein said way prediction structure is configured to receive said input address and to predict which of said indexed plurality of storage locations is storing data associated with said input address;
a n-to-one way selection device (257) coupled (256) to said way prediction structure for selecting, from said n array output data, the data from the said predicted storage location; and
a data cache control unit (254) coupled to said data array (251), said tag comparison block and said way prediction structure, to cause during a first clock cycle said data array to store said associated input data into said predicted storage location if said input address is associated with a store instruction, said input data being stored prior to determining if said predicted storage location is storing data associated with said input address but after reading out said n output data in said n-to-one way selection device;
***characterised by**:*
a register (259) coupled to said n-to-one way selection device (257) and configured to receive and store said data selected by the n-to-one way selection device in said first clock cycle and to provide said predicted storage location in said data array (251) with said stored data for restoration in the next clock cycle;
a data selection device (260) coupled to said data array (251) and to said data cache control unit (254) which receives hit predicted way and hit inpredicted way signals (263, 264) from said tag comparison block, said selection device configured to receive said input data and said data provided by said register (259) such that, during said next clock cycle, the data selection device (260) selectively provides to a second data input port of said data array (251) either a) said data from said register (259) in response to the tag comparison block (262) determining either that none of said indexed storage locations is storing data associated with said input address or that the data is stored in a storage location not predicted (264) by the way prediction structure (255, 268), or b) input data on said input data bus (253) in response to the tag comparison block determining that the storage location storing data associated with said input address is the storage location predicted (263) by the way prediction structure (255, 268); and
wherein, if said tag comparison block (262) determines in said next clock cycle that said input data is stored in a location not predicted by the way prediction structure, the cache control unit (254) again accesses at the first data input port the indexed plurality of storage locations accessed in the first clock cycle and the data associated with the input address is thereby stored in the storage location determined by the tag comparison block (262) which provides the data array (251) with the correct way of data cache (267) for said store access of said input address.

2. A data cache as claimed in claim 1 or 2 wherein said data selection device is a multiplexor.

3. A data cache as claimed in claim 1, 2, or 3 wherein said way prediction structure comprises a way prediction array (255) for storing a plurality of way predictions, and wherein said way prediction array selects one of said plurality of way predictions according to said input address.

4. A data cache as claimed in claim 3 further comprising a way prediction control unit (268) configured to receive the storage location determined by the tag comparison block (262) and to store the determined storage location in a storage location of the way prediction array indexed by the input address concurrently with the storage in the data array (251) of the input data and the data from the register (259).

5. A superscalar microprocessor comprising a data cache as claimed in any one of claims 1 to 4.

6. A superscalar microprocessor as claimed in claim 5 further comprising a load/store unit (222) coupled to said data cache wherein said load/store unit is configured to execute load and store instructions.

7. A superscalar microprocessor as claimed in claim 6 further comprising a plurality of functional units (212) configured to execute instructions wherein said plurality of functional units are coupled to said load/store unit, and wherein said plurality of functional units are configured to provide addresses associated with load and store instructions.

8. A superscalar microprocessor as claimed in claim 7 further comprising a reorder buffer (216) coupled to said load/store unit and to said plurality of functional units wherein said reorder buffer is configured to store speculative execution results.

9. A superscalar microprocessor as claimed in claim 8 further comprising a register file (218) coupled to said reorder buffer for storing non-speculative register states.

10. A superscalar microprocessor as claimed in claim 9 further comprising a plurality of reservation stations (210) for storing decoded instructions wherein each one of said plurality of reservations stations is coupled to a respective one of said plurality of functional units.

11. A superscalar microprocessor as claimed in claim 10 further comprising a plurality of decode units (208) configured to provide said decoded instructions wherein each one of said plurality of decode units is coupled to a respective one of said plurality of reservation stations.

12. A superscalar microprocessor as claimed in claim 11 further comprising an instruction alignment unit (206) coupled to said plurality of decode units wherein said instruction alignment unit is configured to align a plurality of instructions to said plurality of decode units.

13. A superscalar microprocessor as claimed in claim 12 further comprising an instruction cache (204) configured to store said plurality of instructions wherein said instruction cache is coupled to said instruction alignment unit.

14. A method for performing a store access to a data cache (224) comprising the steps of:
receiving at least one input address and associated input data at an n-way associative data array (251) where n ≥ 2 including a plurality of storage locations (WAYn) configured to store data bytes wherein said data array has an address input port and, coupled to an input data bus (253), a first data input port, said received input address selecting n indexed storage locations in the data array from each of which array output data is provided;
receiving said input address at a n-way cache tag array (250) configured to store addresses associated with data stored in said data array;
at a tag comparison block (262) coupled to said cache tag array, receiving said input address and comparing the input address with the addresses stored within said cache tag array to determine which if any of said indexed plurality of storage locations is storing data associated with said input address;
receiving said input address at a way prediction structure (255, 268) coupled (256) to said data array and to said tag comparison block and predicting which of said indexed plurality of storage locations is storing data associated with said input address;
selecting from said n array output data in a n-to-one way selection device (257) coupled (256) to said way prediction structure, the data from the said predicted storage location; and
at a data cache control unit (254) coupled to said data array (251), said tag comparison block and said way prediction structure, causing during a first clock cycle said data array to store said associated input data into said predicted storage location if said input address is associated with a store instruction, said input data being stored prior to determining if said predicted storage location is storing data associated with said input address but after reading out said n output data in said n-to-one way selection device;
**characterised in that**:
a register (259) coupled to said n-to-one way selection device (257) receives and stores said data selected by the n-to-one way selection device in said first clock cycle and provides said predicted storage location in said data array (251) with said stored data for restoration in the next clock cycle;
a data selection device (260), coupled to said data array (251) and to said data cache control unit (254) which receives hit predicted and hit unpredicted way signals (263, 264) from said tag comparison block (262), receives said input data and said data provided by said register (259) such that, during said next clock cycle, the data selection device (260) selectively provides to a second data input port of said data array (251) either a) said data from said register (259) in response to the tag comparison block (262) determining either that none of said indexed storage locations is storing data associated with said input address or that the data is stored in a storage location not predicted (264) by the way prediction structure (255, 268), or b) input data on said input data bus (253) in response to the tag comparison block determining that the storage location storing data associated with said input address is the storage location predicted (263) by the way prediction structure (255, 268); and
wherein, if said tag comparison block (262) determines in said next clock cycle that said input data is stored in a location not predicted by the way prediction structure the cache control unit (254) again accesses at the first data input port the indexed plurality of storage locations accessed in the first clock cycle and the data associated with the input address is thereby stored in the storage location determined by the tag comparison block (262) which provides the data array (251) with the correct way of data cache (267) for said store access of said input address.

## Patentansprüche

1. Daten-Cachespeicher (224) mit:
einem n-Wege-Assoziativ-Datenarray (251), bei dem n ≥ 2 ist, mit mehreren Speicherplätzen (WAYn) zum Speichern von Datenbytes, wobei das Datenarray einen Adresseneingangsport und einen mit einem Eingangsdatenbus (253) gekoppelten ersten Dateneingangsport aufweist, und zwar zum Empfangen mindestens einer Eingangsadresse und dieser zugeordneten Eingangsdaten, wobei die Eingangsadresse n indizierte Speicherplätze in dem Datenarray wählt, von denen jeweils Array-Ausgangsdaten bereitgestellt werden;
einem n-Wege-Cachespeicher-Markierungsarray (250) zum Empfangen der Eingangsadresse und zum Speichern von Adressen, die in dem Datenarray gespeicherten Daten zugeordnet sind;
einem mit dem Cachespeicher-Markierungsarray gekoppelten Markierungsvergleichsblock (262), der die Eingangsadresse empfängt und die Eingangsadresse mit den in dem Cachespeicher-Markierungsarray gespeicherten Adressen vergleicht, und zwar zum Feststellen ob, und wenn ja welcher, der indizierten mehreren Speicherplätze der Eingangsadresse zugeordnete Daten speichert;
einer mit dem Datenarray und mit dem Markierungsvergleichsblock gekoppelten (256) Wege-Vorhersagestruktur (255,268), die zum Empfangen der Eingangsadresse und zum Vorhersagen vorgesehen ist, welcher der indizierten mehreren Speicherplätze der Eingangsadresse zugeordnete Daten speichert;
einer mit der Wege-Vorhersagestruktur gekoppelten (256) n-zu-ein-Wege-Selektionsvorrichtung (257) zum Auswählen aus den n-Array-Ausgangsdaten der Daten von dem vorhergesagten Speicherplatz; und
einer Daten-Cachespeicher-Steuereinheit (254), die mit dem Datenarray (251), dem Markierungsvergleichsblock und der Wege-Vorhersagestruktur gekoppelt ist, um zu veranlassen, dass während des ersten Taktzyklus das Datenarray die zugeordneten Eingangsdaten an dem vorhergesagten Speicherplatz speichert, wenn die Eingangsadresse einem Speicherbefehl zugeordnet ist, wobei die Eingangsdaten vor dem Feststellen, ob der vorhergesagte Speicherplatz der Eingangsadresse zugeordnete Daten speichert, jedoch nach dem Auslesen der n Eingangsdaten in der n-zu-ein-Wege-Selektionsvorrichtung, gespeichert werden;
***gekennzeichnet durch**:*
ein Register (259), das mit der n-zu-ein-Wege-Selektionsvorrichtung (257) gekoppelt ist und zum Empfangen und Speichern der von der n-zu-ein-Wege-Selektionsvorrichtung ausgewählten Daten in einem ersten Taktzyklus und zum Versorgen des vorhergesagten Speicherplatzes in dem Datenarray (251) mit gespeicherten Daten zum Umspeichern im nächsten Zyklus vorgesehen ist;
eine Datenselektionsvorrichtung (260), die mit dem Datenarray (251), der Selektionsvorrichtung und der Daten-Cachespeicher-Steuereinheit (254) gekoppelt ist, die Wege-Signale (263,264) für vorhergesagte und nicht vorhergesagte Treffer von dem Markierungsvergleichsblock empfängt, die zum Empfangen der Eingangsdaten und der von dem Register (259) bereitgestellten Daten vorgesehen ist, so dass während des nächsten Taktzyklus die Datenselektionsvorrichtung (260) einem zweiten Dateneingangsport des Datenarrays (251) selektiv zuführt: entweder a) Daten von dem Register (259) in Reaktion auf die Feststellung des Markierungsvergleichsblocks (262), dass entweder keiner der indizierten Speicherplätze der Eingangsadresse zugeordnete Daten speichert oder dass die Daten an einem von der Wege-Vorhersagestruktur (255,268) nicht vorhergesagten (264) Speicherplatz gespeichert sind, oder b) Eingangsdaten auf dem Eingangsdatenbus (253) in Reaktion auf die Feststellung des Markierungsvergleichsblocks, dass der Speicherplatz, an dem der Eingangsadresse zugeordnete Daten gespeichert sind, der von der Wege-Vorhersagestruktur (255,268) vorhergesagte (263) Speicherplatz ist; und
wobei, wenn der Markierungsvergleichsblock (262) im nächsten Taktzyklus feststellt, dass die Eingangsdaten an einem von der Wege-Vorhersagestruktur nicht vorhergesagten Speicherplatz gespeichert sind, die Cachespeicher-Steuereinheit (254) wieder am ersten Dateneingangsport auf die indizierten mehreren Speicherplätze zugreift, auf die im ersten Taktzyklus zugegriffen worden ist, und **dadurch** die der Eingangsadresse zugeordneten Daten an dem von dem Markierungsvergleichsblock (262), der dem Datenarray (251) den korrekten Weg des Daten-Cachespeichers (267) für den Speicherzugriff auf die Eingangsadresse liefert, bestimmten Speicherplatz gespeichert werden.

2. Daten-Cachespeicher nach Anspruch 1 oder 2, bei dem die Datenselektionsvorrichtung ein Multiplexer ist.

3. Daten-Cachespeicher nach Anspruch 1, 2 oder 3, bei dem die Wege-Vorhersagestruktur ein Wege-Vorhersagearray (255) zum Speichern mehrerer Wegevorhersagen aufweist und bei der das Wege-Vorhersagearray einen der mehreren Wege-Vorhersagen entsprechend der Eingangsadresse auswählt.

4. Daten-Cachespeicher nach Anspruch 3, ferner mit einer Wege-Vorhersage-Steuereinheit (268) zum Empfangen des von dem Markierungsvergleichsblock (262) bestimmten Speicherplatzes und zum Speichern des bestimmten Speicherplatzes an einem Speicherplatz des Wege-Vorhersagearrays, das von der Eingangsadresse gleichzeitig mit der Speicherung in dem Datenarray (251) der Eingangsdaten und der Daten von dem Register (259) indiziert wird.

5. Superskalarer Mikroprozessor mit einem Daten-Cachespeicher nach einem der Ansprüche 1 bis 4.

6. Superskalarer Mikroprozessor nach Anspruch 5, ferner mit einer mit dem Daten-Cachespeicher gekoppelten Lade-Speicher-Einheit (222), die zum Ausführen von Lade- und Speicherbefehlen vorgesehen ist.

7. Superskalarer Mikroprozessor nach Anspruch 6, ferner mit mehreren zum Ausführen von Befehlen vorgesehenen Funktionseinheiten (212), die mit der Lade-Speicher-Einheit gekoppelt sind und zum Liefern von Lade- und Speicherbefehlen zugeordneten Adressen vorgesehen sind.

8. Superskalarer Mikroprozessor nach Anspruch 7, ferner mit einem mit der Lade-/Speichereinheit und den mehreren Funktionseinheiten gekoppelten Neuordnungspuffer (216), der zum Speichern spekulativer Ausführungsergebnisse vorgesehen ist.

9. Superskalarer Mikroprozessor nach Anspruch 8, ferner mit einer mit dem Neuordnungspuffer gekoppelten Registerdatei (218) zum Speichern nichtspekulativer Registerzustände.

10. Superskalarer Mikroprozessor nach Anspruch 9, ferner mit mehreren Reservierungsstationen (210) zum Speichern dekodierter Befehle, wobei jede der mehreren Reservierungsstationen mit jeweils einer der mehreren Funktionseinheiten gekoppelt ist.

11. Superskalarer Mikroprozessor nach Anspruch 10, ferner mit mehreren Dekodiereinheiten (208) zum Liefern der dekodierten Befehle, wobei jede der mehreren Dekodiereinheiten mit jeweils einer der mehreren Reservierungsstationen gekoppelt ist.

12. Superskalarer Mikroprozessor nach Anspruch 11, ferner mit einer mit den mehreren Dekodiereinheiten gekoppelten Befehlsanpassungseinheit (206) zum Anpassen mehrerer Befehle an die mehreren Dekodiereinheiten.

13. Superskalarer Mikroprozessor nach Anspruch 12, ferner mit einem zum Speichern der mehreren Befehle vorgesehenen Befehls-Cachespeicher (204), der mit der Befehlsanpassungseinheit gekoppelt ist.

14. Verfahren zum Durchführen eines Speicherzugriffs auf einen Daten-Cachespeicher (224), mit folgenden Schritten:
Empfangen mindestens einer Eingangsadresse dieser zugeordneten Eingangsdaten an einem n-Wege-Assoziativ-Datenarray (251), bei dem n ≥ 2 ist, mit mehreren Speicherplätzen (WAYn) zum Speichern von Datenbytes, wobei das Datenarray einen Adresseneingangsport und einen mit einem Eingangsdatenbus (253) gekoppelten ersten Dateneingangsport aufweist, wobei die empfangene Eingangsadresse n indizierte Speicherplätze in dem Datenarray wählt, von denen jeweils Arrayausgangsdaten bereitgestellt werden;
Empfangen der Eingangsadresse an einem n-Wege-Cachespeicher-Markierungsarray (250) zum Speichern von Adressen, die in dem Datenarray gespeicherten Daten zugeordnet sind;
an einem mit dem Cachespeicher-Markierungsarray gekoppelten Markierungsvergleichsblock (262) Empfangen der Eingangsadresse und Vergleichen der Eingangsadresse mit den in dem Cachespeicher-Markierungsarray gespeicherten Adressen, und zwar zum Feststellen ob, und wenn ja welcher, der indizierten mehreren Speicherplätze der Eingangsadresse zugeordnete Daten speichert;
Empfangen der Eingangsadresse an einer mit dem Datenarray und mit dem Markierungsvergleichsblock gekoppelten (256) Wege-Vorhersagestruktur (255,268) und Vorhersagen, welcher der indizierten mehreren Speicherplätze der Eingangsadresse zugeordnete Daten speichert;
Auswählen aus den n-Array-Ausgangsdaten in einer mit der Wege-Vorhersagestruktur gekoppelten (256) n-zu-ein-Wege-Selektionsvorrichtung (257) der Daten von dem vorhergesagten Speicherplatz; und
an einer Daten-Cachespeicher-Steuereinheit (254), die mit dem Datenarray (251), dem Markierungsvergleichsblock und der Wege-Vorhersagestruktur gekoppelt ist, Veranlassen, dass während des ersten Taktzyklus das Datenarray die zugeordneten Eingangsdaten an dem vorhergesagten Speicherplatz speichert, wenn die Eingangsadresse einem Speicherbefehl zugeordnet ist, wobei die Eingangsdaten vor dem Feststellen, ob der vorhergesagte Speicherplatz der Eingangsadresse zugeordnete Daten speichert, jedoch nach dem Auslesen der n Eingangsdaten in der n-zu-ein-Wege-Selektionsvorrichtung gespeichert werden;
**dadurch gekennzeichnet, dass**:
ein Register (259), das mit der n-zu-ein-Wege-Selektionsvorrichtung (257) gekoppelt ist, die von der n-zu-ein-Wege-Selektionsvorrichtung ausgewählten Daten in einem ersten Taktzyklus empfängt und speichert und den vorhergesagten Speicherplatz in dem Datenarray (251) mit gespeicherten Daten zum Umspeichern im nächsten Zyklus versorgt;
eine Datenselektionsvorrichtung (260), die mit dem Datenarray (251) und der Daten-Cachespeicher-Steuereinheit (254) gekoppelt ist, die Wege-Signale (263,264) für vorhergesagte und nicht vorhergesagte Treffer von dem Markierungsvergleichsblock (262) empfängt, die Eingangsdaten und die von dem Register (259) bereitgestellten Daten empfängt, so dass während des nächsten Taktzyklus die Datenselektionsvorrichtung (260) einem zweiten Dateneingangsport des Datenarrays (251) selektiv zuführt: entweder a) Daten von dem Register (259) in Reaktion auf die Feststellung des Markierungsvergleichsblocks (262), dass entweder keiner der indizierten Speicherplätze der Eingangsadresse zugeordnete Daten speichert oder dass die Daten an einem von der Wege-Vorhersagestruktur (255,268) nicht vorhergesagten (264) Speicherplatz gespeichert sind, oder b) Eingangsdaten auf dem Eingangsdatenbus (253) in Reaktion auf die Feststellung des Markierungsvergleichsblocks, dass der Speicherplatz, an dem der Eingangsadresse zugeordnete Daten gespeichert sind, der von der Wege-Vorhersagestruktur (255,268) vorhergesagte (263) Speicherplatz ist; und
wobei, wenn der Markierungsvergleichsblock (262) im nächsten Taktzyklus feststellt, dass die Eingangsdaten an einem von der Wege-Vorhersagestruktur nicht vorhergesagten Speicherplatz gespeichert sind, die Cachespeicher-Steuereinheit (254) wieder am ersten Dateneingangsport auf die indizierten mehreren Speicherplätze zugreift, auf die im ersten Taktzyklus zugegriffen worden ist, und dadurch die der Eingangsadresse zugeordneten Daten an dem von dem Markierungsvergleichsblock (262), der dem Datenarray (251) den korrekten Weg des Daten-Cachespeichers (267) für den Speicherzugriff auf die Eingangsadresse liefert, bestimmten Speicherplatz gespeichert werden.

## Revendications

1. Antémémoire de données (224) comprenant:
une matrice de données associative à n voies (251) où n ≥ 2 incluant une pluralité de positions de stockage WAYn (VOIEn) configurée pour stocker des octets de données dans laquelle ladite matrice de données possède un port d'entrée d'adresse et, couplé à un bus de données d'entrée (253), un premier port d'entrée de données, pour recevoir au moins une adresse d'entrée et des données d'entrée associées, dans laquelle ladite adresse d'entrée sélectionne n positions de stockage indexées dans la matrice de données à partir de chacune desquelles les données de sortie de la matrice sont fournies ;
une matrice d'étiquettes d'antémémoire à n voies (250) configurée pour recevoir ladite adresse d'entrée et stocker des adresses associées aux données stockées dans ladite matrice de données ;
un bloc de comparaison d'étiquettes (262) couplé à ladite matrice d'étiquettes d'antémémoire, ledit bloc de comparaison d'étiquette recevant ladite adresse d'entrée et comparant l'adresse d'entrée aux adresses stockées dans ladite matrice d'étiquettes d'antémémoire afin de déterminer quelle position éventuelle de ladite pluralité de positions de stockage stocke les données associées à ladite adresse d'entrée;
une structure de prédiction de voie (255, 268) couplée (256) à ladite matrice de données et audit bloc de comparaison d'étiquettes, ladite structure de prédiction de voie étant configurée pour recevoir ladite adresse d'entrée et pour prédire laquelle de ladite pluralité indexée des positions de stockage stocke les données associées à ladite adresse d'entrée ;
un dispositif de sélection de voie de n à une (257) couplée (256) à ladite structure de prédiction de voie servant à sélectionner, à partir desdites n données de sortie de la matrice, les données issues de ladite position de stockage prédite ; et
une unité de commande d'antémémoire de données (254) couplée à ladite matrice de données (251), au dit bloc de comparaison d'étiquettes et à ladite structure de prédiction de voie, pour entrainer pendant un premier cycle d'horloge ladite matrice de données à stocker lesdites données d'entrée associées à ladite position de stockage prédite si ladite adresse d'entrée est associée à une instruction de stockage, lesdites données d'entrée étant stockées avant de déterminer si ladite position de stockage prédite stocke des données associées à ladite adresse d'entrée mais après lecture desdites n données de sortie dans ledit dispositif de sélection de voie de n à une ;
**caractérisée par** :
un registre (259) couplé audit dispositif de sélection de voie de n à une (257) et configuré pour recevoir et stocker lesdites données sélectionnées par le dispositif de sélection de voie de n à une dans ledit premier cycle d'horloge et pour fournir ladite position de stockage prédite dans ladite matrice de données (251) avec lesdites données stockées pour une restauration dans le cycle d'horloge suivant ;
un dispositif de sélection de données (260) couplé à ladite matrice de données et à ladite unité de commande d'antémémoire de données (254) qui reçoit des signaux de voie prédite de renvoi et des signaux de voie non prédite de renvoi (263, 264) à partir dudit bloc de comparaison d'étiquettes, ledit dispositif de sélection étant configuré pour recevoir lesdites données d'entrée et lesdites données fournies par ledit registre (259) de telle façon que, pendant ledit cycle d'horloge suivant, le dispositif de sélection de données (260) fournit sélectivement à un second port d'entrée de données de ladite matrice de données (251), a) soit lesdites données issues dudit registre (259) en réponse au bloc de comparaison d'étiquettes (262) déterminant, soit qu'aucune desdites positions de stockage indexées ne stocke des données associées à ladite adresse d'entrée, soit que les données sont stockées dans une position de stockage non prédite (264) par la structure de prédiction de voie (255, 268), b) soit des données d'entrée sur ledit bus de données d'entrée (253) en réponse au bloc de comparaison d'étiquettes déterminant que la position de stockage stockant les données associées à ladite adresse d'entrée est la position de stockage prédite (263) par la structure de prédiction de voie (255, 268) ; et
dans lequel, si le bloc de comparaison d'étiquette (262) détermine dans ledit cycle d'horloge suivant que lesdites données d'entrée sont stockées dans une position non prédite par la structure de prédiction de voie, l'unité de commande d'antémémoire (254) accède de nouveau au niveau du premier port d'entrée de données à la pluralité indexée de positions de stockage accessibles dans le premier cycle d'horloge et les données associées à l'adresse d'entrée sont, de ce fait, stockées dans la position de stockage déterminée par le bloc de comparaison d'étiquettes (262) qui fournit à la matrice de données (251) la voie correcte de l'antémémoire de données (267) correspondant audit accès de stockage de ladite adresse d'entrée.

2. Antémémoire de données selon la revendication 1 ou 2, dans laquelle ledit dispositif de sélection de données est un multiplexeur.

3. Antémémoire de données selon la revendication 1, 2 ou 3, dans laquelle ladite structure de prédiction de voie comprend une matrice de prédiction de voie (255) pour stocker une pluralité de prédictions de voie, et dans laquelle ladite matrice de prédiction de voie sélectionne l'une de ladite pluralité de prédictions de voie en conformité avec ladite adresse d'entrée.

4. Antémémoire de données selon la revendication 3, comprenant, de plus, une unité de commande de prédiction de voie (268) configurée pour recevoir la position de stockage déterminée par le bloc de comparaison d'étiquettes (262) et pour stocker la position de stockage déterminée dans une position de stockage de la matrice de prédiction de voie indexée par l'adresse d'entrée simultanément au stockage dans la matrice de données (251) des données d'entrée et des données issues du registre (259).

5. Microprocesseur superscalaire comprenant une antémémoire de données selon l'une quelconque des revendications 1 à 4.

6. Microprocesseur superscalaire selon la revendication 5 comprenant, de plus, une unité de chargement et de stockage (222) couplée à ladite antémémoire de données dans lequel ladite unité de chargement et de stockage est configurée pour exécuter des instructions de chargement et de stockage.

7. Microprocesseur superscalaire selon la revendication 6, comprenant, de plus, une pluralité d'unités fonctionnelles (212) configurées pour exécuter des instructions dans lequel ladite pluralité des unités fonctionnelles sont couplées à ladite unité de chargement et de stockage, et dans lequel ladite pluralité des unités fonctionnelles est configurée pour fournir des adresses associées aux instructions de chargement et de stockage.

8. Microprocesseur superscalaire selon la revendication 7 comprenant, de plus, un tampon de réorganisation (216) couplé à ladite unité de chargement et de stockage et à ladite pluralité d'unités fonctionnelles dans lequel ledit tampon de réorganisation est configuré pour stocker des résultats d'exécution spéculative.

9. Microprocesseur superscalaire selon la revendication 8 comprenant, de plus, un fichier de registres (218) couplé audit tampon de réorganisation pour stocker des états de registre non spéculatifs.

10. Microprocesseur superscalaire selon la revendication 9 comprenant, de plus, une pluralité de stations de mise en attente (210) pour stocker des instructions décodées, dans lequel chacune de ladite pluralité de stations de mise en attente est couplée à une unité respective de ladite pluralité d'unités fonctionnelles.

11. Microprocesseur superscalaire selon la revendication 10 comprenant, de plus, une pluralité d'unités de décodage (208) configurées pour fournir lesdites instructions décodées dans lesquelles chaque unité de ladite pluralité d'unités de décodage est couplée à une station respective de ladite pluralité de stations de mise en attente.

12. Microprocesseur superscalaire selon la revendication 11 comprenant, de plus, une unité d'alignement d'instructions (206) couplée à ladite pluralité d'unités de décodage dans lequel ladite unité d'alignement d'instructions est configurée pour aligner une pluralité d'instructions sur ladite pluralité d'unités de décodage.

13. Microprocesseur superscalaire selon la revendication 12 comprenant, de plus, une antémémoire d'instructions (204) configurée pour stocker ladite pluralité d'instructions dans lequel ladite antémémoire d'instructions est couplée à ladite unité d'alignement d'instructions.

14. Procédé servant à exécuter un accès mémoire dans une antémémoire de données (224) comprenant les étapes consistant à :
recevoir au moins une adresse d'entrée et des données d'entrée associées au niveau d'une matrice de données associative à n voies (251) où n ≥ 2 incluent une pluralité de positions de stockage (VOIESn) configurée pour stocker des octets de données dans lequel ladite matrice de données comporte un port d'entrée d'adresse et, couplé à un bus de données d'entrée (253), un premier port d'entrée de données, ladite adresse d'entrée reçue sélectionnant n positions de stockage indexées dans la matrice de données à partir de chacune desquelles des données de sortie de la matrice sont fournies ;
recevoir ladite adresse d'entrée au niveau d'une matrice d'étiquettes d'antémémoire à n voies (250) configurée pour stocker des adresses associées aux données stockées dans ladite matrice de données ;
au niveau d'un bloc de comparaison de données (262) couplé à ladite matrice d'étiquettes d'antémémoire, recevoir ladite adresse d'entrée et comparer l'adresse d'entrée aux adresses stockées à l'intérieur de ladite matrice d'étiquettes d'antémémoire pour déterminer quelle position éventuelle de ladite pluralité indexée de positions de stockage stocke les données associées à ladite adresse d'entrée ;
recevoir ladite adresse d'entrée au niveau d'une structure de prédiction de voie (255, 268) couplée (256) à ladite matrice de données et audit bloc de comparaison d'étiquettes et prédire laquelle de ladite pluralité indexée de positions de stockage stocke les données associées à ladite adresse d'entrée ;
sélectionner à partir desdites n données de sortie de matrice , dans un dispositif de sélection de voie de n à une (257) couplé (256) à ladite structure de prédiction de voie, les données issues de ladite position de stockage prédite ; et
au niveau d'une unité de commande d'antémémoire de données (254) couplée à ladite matrice de données (251), audit bloc de comparaison d'étiquettes et à ladite structure de prédiction de voie, entrainer pendant un premier cycle d'horloge ladite matrice de données à stocker lesdites données d'entrée associées dans ladite position de stockage prédite si ladite adresse d'entrée est associée à une instruction de stockage, lesdites données d'entrée étant stockées avant de déterminer si ladite position de stockage prédite stocke les données associées à ladite d'adresse d'entrée mais après l'extraction desdites n données de sortie dans ledit dispositif de sélection de voie de n à une ;
**caractérisé en ce que** :
un registre (259) couplé audit dispositif de sélection de voie de n à une (257) reçoit et stocke lesdites données sélectionnées par le dispositif de sélection de voie de n à une dans ledit premier cycle d'horloge et fournit à ladite position de stockage prédite dans ladite matrice de données (251) lesdites données stockées pour une restauration dans le prochain cycle d'horloge ;
un dispositif de sélection de données (260), couplé à ladite matrice de données (251) et à ladite unité de commande d'antémémoire de données (254) qui reçoit des signaux de voie de renvoi prédite et non prédite (263, 264) à partir dudit bloc de comparaison d'étiquettes (262), reçoit lesdites données d'entrée et lesdites données fournies par ledit registre (259) de telle sorte que, pendant ledit cycle d'horloge suivant, le dispositif de sélection de données (260) fournit sélectivement à un second port d'entrée de données de ladite matrice de données (251) soit a) lesdites données issues dudit registre (259) en réponse au bloc de comparaison d'étiquettes (262) déterminant soit qu'aucune desdites positions de stockage indexées ne stocke des données associées à ladite adresse d'entrée, soit que les données sont stockées dans une position de stockage non prédite (264) par la structure de prédiction de voie (255, 268), soit b), des données d'entrée sur ledit bus de données d'entrée (253) en réponse au bloc de comparaison d'étiquettes déterminant que la position de mémoire stockant les données associées à ladite adresse d'entrée est la position de mémoire prédite (263) par la structure de prédiction de voie (255, 268) ; et
dans lequel, si ledit bloc de comparaison d'étiquettes (262) détermine dans ledit cycle d'horloge suivant que lesdites données d'entrée sont stockées dans une position non prédite par la structure de prédiction de voie, l'unité de commande d'antémémoire (254) accède de nouveau, au premier port d'entrée de données, à la pluralité indexée de positions de stockage accessibles dans le premier cycle d'horloge et les données associées à l'adresse d'entrée sont stockées de ce fait à la position de stockage déterminée par le bloc de comparaison d'étiquettes (262) qui fournit à la matrice de données (251) la voie correcte d'antémémoire de données (267) pour ledit accès mémoire de ladite adresse d'entrée.
